# EUROPEAN PATENT APPLICATION

(11) **EP 0 989 055 A2**
(43) Date of publication of application: **29.03.2000**
(21) Application number: 99307543.1
(22) Date of filing: 23.09.1999
(51) Int. Cl.: B62J 15/02

(54) **Cycle mudguard stay & assembly**

(30) Priority: 23.09.1998 GB 9820590
(71) Applicant: Stratford Precision Plastics Ltd., Stratford upon Avon, Warwickshire CV37 9NQ (GB)
(72) Inventor: Webb, Ronald Richard, Warwickshire CV37 9BW (GB)
(74) Representative: Stanley, Michael Gordon

(57) **Abstract**

A cycle mudguard stay assembly includes a clip member 9 having a generally C-shaped portion 10 of resilient material which embraces a flanged bush 17 secured to a lug 26 on a cycle frame or fork in the region of a wheel spindle. Fixing blocks 15 are overmoulded onto heavy gauge wire stay legs 14A, 14B and joined to the C-shaped portion by hinge sections 11 which allow for a choice of stay type. In use the clip member releases from the bush above a predetermined release load.

## Description

This invention relates to cycle mudguard stay fixing devices and to cycle mudguard stay assemblies.

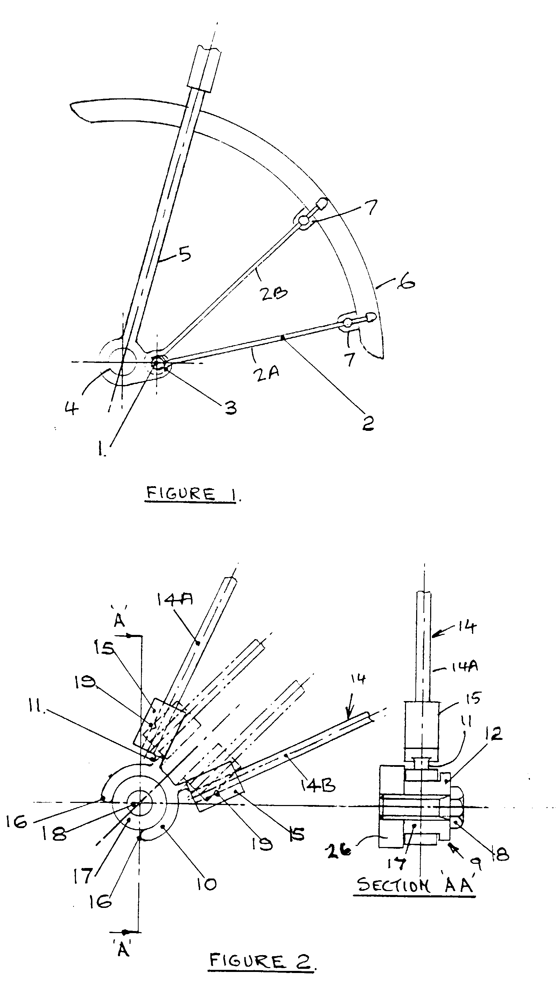

Figure 1 of the accompanying drawings shows a conventional 'V' type cycle mudguard stay 2 made of heavy gauge wire bent into a V with two legs 2A, 2B which each extend generally radially with respect to a wheel spindle 4.. The stay 2 is secured to a lug on the cycle fork by a setscrew 1 which passes through an eye formed as a loop 3 at the radially inner join of the stay legs 2A, 2B. Another V stay 2 is fitted on the- other side of the wheel to hold a mudguard 6 by means of fittings 7.

Other conventional designs of cycle mudguard stay are known, such as the single stay where one leg of the V is omitted but the eye is provided for fixing, the parallel stay where the legs are parallel rather than in a V and the loop stay where a single loop of wire is formed as a single stay on each side of the wheel and extends as a bridge over the wheel.

It has been considered desirable to use in the region of a cycle wheel spindle a mudguard stay fixing device which releases under a given tensile load in the stay. Such a load could be applied if the mudguard became jammed against a tyre fitted to the wheel, e.g. by mud, stones or accidental damage,. In such circumstances, the fixing device would release and allow the mudguard to be freed from the tyre. This is especially desirable for the front wheel where wheel locking can rapidly result in the rider losing balance or stability.

There are already on the market fixing devices which release as described but they tend to suffer from the weakness of becoming jammed due to dirt and small stones, thus not being in a suitable state to release under a predetermined load. Hence it is an object of the present invention to provide a cycle mudguard stay fixing device of this kind which is not prone to jamming.

According to a first aspect of the present invention there is provided a cycle mudguard stay fixing device comprising a clip member having a generally C-shaped portion arranged in use to embrace a support member on a cycle fork, or frame, in the region of a wheel spindle and having securing means for securing the clip member to a mudguard stay comprising one or more legs arranged generally radially of the wheel spindle, at least one of the C-shaped portion and the support member being resiliently deformable such that in use the clip member releases from the support member above a predetermined tensile force from the stay.

Preferably, the clip member has a part-cylindrical inner surface for embracing the support member. The stay fixing device is intended to be made available for both original equipment manufacturers as well as a replacement item and it is highly desirable that it is capable of performing satisfactorily for the life of the cycle. It is a weakness with existing fixing devices that there are two releasable parts which can only be fitted together during assembly by distorting one of the releasable parts. This distortion affects the predetermined release load, particularly in one design in which the 'eye' of a conventional wire V stay is forced into a plastics moulding and is gripped within the moulded part. Apart from distortion during fitting, the eye of the 'V' stay can vary in size during production, thus giving wide variations in the predetermined release load. By providing a part-cylindrical inner surface on the clip member, the support member can be assembled laterally into the clip member with little or no distortion.

Conveniently, the clip member is a plastics moulding. This assists the selection of a suitably resilient material to allow the clip member to be resiliently deformable. The securing means may comprise a respective fixing block for the or each leg which can allow the or each fixing block to be moulded onto the radially inner end of the respective leg. At least one of the or each fixing blocks may be joined to the C-shaped portion by a flexible hinge section, in which case there may be two fixing blocks which in use are secured to respective stays which can be opened to a V by flexing of the or each hinge section.

The invention also provides according to a second aspect a cycle mudguard stay assembly comprising a fixing device according to the first aspect of the invention secured by said securing means to a mudguard stay comprising one or more legs which in use are arranged generally radially of the wheel spindle.

Conveniently, where the clip member is a plastics moulding, and the or each fixing block may be moulded onto the radially inner end of the respective stay leg, in which case the or each stay leg may have a formation which interlocks with the respective fixing block.

The stay assembly may further comprise a support member arranged in use to be fastened to the cycle frame in the region of the wheel spindle and having an outer periphery in engagement with the C-shaped portion of the clip member. The support member preferably comprises a cylindrical boss, and preferably location means is provided to axially locate the clip member on the support member. Conveniently such location means comprises a flange or lug on the support member.

The support member may have a through hole for a fastener, such as a setscrew, which in use secures the support member to the cycle fork or frame. Alternatively, the support member may include a fastener for securing the support member to the cycle fork or frame, in which case the fastener may be a setscrew or threaded insert for engagement with a threaded hole in said fork or frame, and the support member a plastics moulding which is overmoulded onto the fastener.

The invention also provides according to a third aspect a cycle mudguard stay assembly comprising two assemblies according to the second aspect and a bridge member which in use extends over the wheel and provides a direct mounting for the mudguard, the bridge member being secured to the stay legs at their radially outer ends. Conveniently, the bridge member is a plastics moulding which is overmoulded onto the radially outer ends of the stay legs.

The bridge member may be used with more conventional stays, so according to a fourth aspect of the invention there is provided a cycle mudguard stay assembly comprising at least two legs which are in use arranged one on each side of a wheel and extend generally radially of a wheel spindle and a bridge member which in use extends over the wheel and provides a direct mounting for the mudguard, wherein the bridge member is a plastics moulding which is secured to the stay legs by being overmoulded onto the radially outer ends of the stay legs.

Preferably the or each stay may have a formation which interlocks with the bridge member. Conveniently, the bridge member has a hole for a fastener which in use extends through a hole in the mudguard. The bridge member may have at least one projection which in use extends through a hole in a mudguard and locates the mudguard on the bridge member, preferably the or each projection may have a head to clip together the mudguard and the bridge member. The or each hole for the projection is may be keyhole shaped. Alternatively or additionally the or each head is profiled to snap through the hole in the mudguard.

The invention also comprises a mudguard assembly having a fixing device or stay assembly as described above.

The invention will now be described by way of example with reference to the remaining Figures of the accompanying drawings, in which:-
Figure 2 is a composite view of a cycle mudguard stay assembly according to the invention showing, in the left view, a side elevation of the stay assembly in its fitted condition as a V type stay (with the as moulded condition shown ghosted) and, in the right view, a section on the line "A-A" in the left view;
Figure 3 is an end elevation of the stay assembly shown in Figure 2 in the as moulded condition.
Figure 4 is a composite view of a cycle mudguard stay assembly comprising two assemblies as shown in Figures 2 and 3 and further comprising a bridge member, the left view being a side elevation and the right view being a front elevation as viewed on arrow "B"; and
Figure 5 is an end elevation of an alternative cycle mudguard stay assembly according to the invention.

Referring to Figures 2 to 4, a cycle mudguard stay fixing device comprises a clip member 10 having a generally C-shaped portion with arms 16 which have a part-cylindrical inner surface to embrace a support member in the form of a cylindrical bush 17. The bush 17 has a through hole for a setscrew 18 which secures the bush to a lug 26 on a cycle fork or frame by in the region of a wheel spindle in a similar manner to the conventional stay shown in Figure 1. A flange 12 on the bush 17 is provided to axially locate the clip member relative to the lug 26. The clip member 10 includes fixing blocks 15 which are each joined to the C-shaped portion 10 by a respective flexible hinge section 11, the clip member being moulded from a suitable resilient plastics material such as a nylon, or a polyolefin.

A mudguard stay 14 has two legs 14A, 14B of heavy gauge wire and the fixing blocks 15 are each moulded onto the radially inner end of a respective stay leg 14A, 14B to secure the clip member to the stay. The stay legs 14A, 14B are arranged generally radially of the wheel spindle so that the outer ends of the arms 16 of the C-shaped portion 10 are substantially diametrically opposite the stay legs.

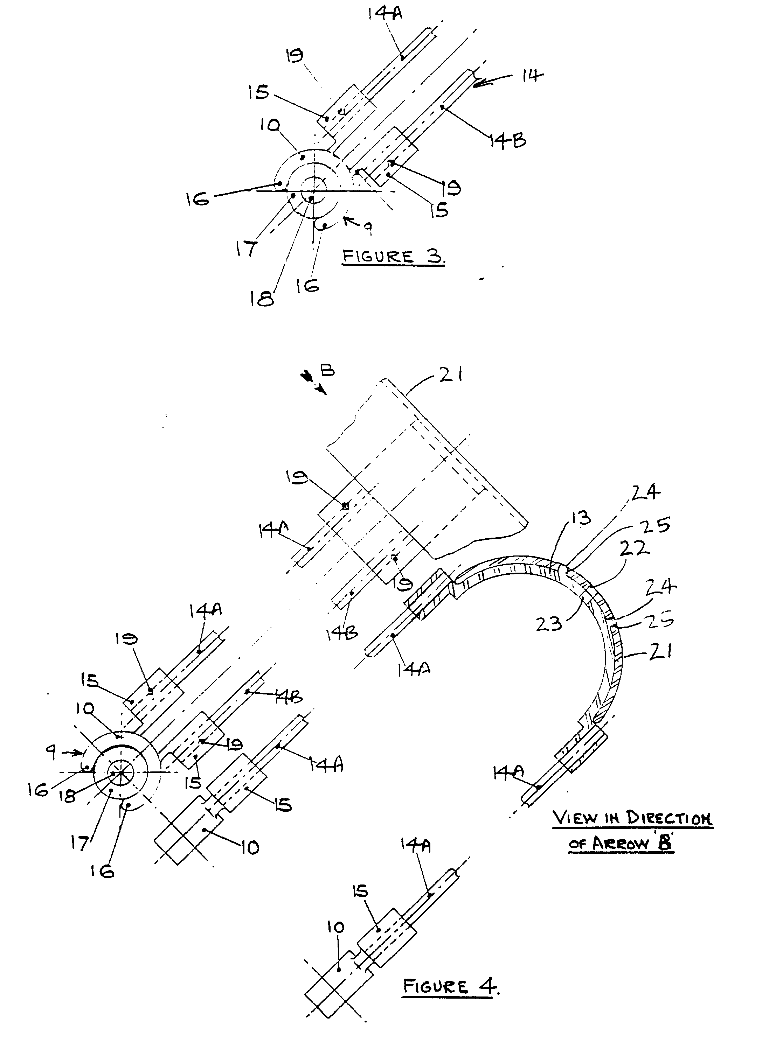

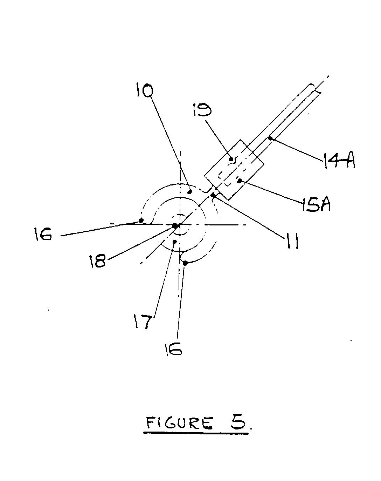

The clip member 10, as shown in Figure 3, is in the as moulded condition and in this condition may be used in the parallel stay assembly shown in Figure 4 further including a bridge member 13 secured to the stay legs 14A, 14B at their radially outer ends and which in use extends over the wheel and provides a direct mounting for the mudguard. The bridge member 13 is of plastics material and the radially outer ends of the stay legs 14A , 14B are encapsulated by overmoulding. In the alternative, the stay legs 14A, 14B are easily opened out to form a V type stay assembly by bending of the hinge sections 11 as shown in the left view of Figure 2.

The mudguard 21 has a hole 22 which matches corresponding hole 23 arranged centrally of the bridge member 13 for a fastener, e.g. a nut and bolt, for securing the mudguard to the bridge member. Additional location, which helps prevent the bridge member 13 becoming skewed relative to the mudguard 21, is provided by integrally moulded cylindrical projections or studs 24 which each engage in a corresponding location hole 25 in the mudguard 21. The length of each projection 24 is preferably the same as the thickness of the mudguard 21 so that they lie flush when the bridge member 13 and mudguard 21 are assembled together. It will be appreciated that the bridge member 13 can be used with other, more conventional, stays such as those with a simple eye fixing as shown in Figure 1. For ease of assembly the holes 25 can be slightly elongate, i.e. oval, in the direction away from the hole 22. If required, only one projection 24 may be provided, preferably centrally of the mudguard and circumferentally spaced from the fastener hole 22.

Where the ends of the stay legs 14A, 14B are overmoulded by the fixing blocks 15 and the bridge member 13, each end of stay leg has a formation, for example in the form of a notch, 19 which interlocks with the respective moulding 15, 13.

In use the clip member 10 releases from the bush 17 above a predetermined tensile force, preferably between 8-12 Kg, from the stay 14 such as might arise if a large stone or an accumulation of mud builds up between the wheel and the mudguard. This predetermined force or release load is determined by various factors, including the distance between the ends of the arms 16 of the clip member 10, these being sprung over the bush 17 to release the stay assembly from the lug 26. However, the arms 16 do not have to be sprung over the bush 17 during assembly since the bush 17 can simply be inserted into the clip member prior to fixing the bush to the lug 26 with the setscrew 18. This helps to avoid any permanent distortion of the clip member 10 which would reduce the release load. A very light interference fit between the bush 17 and the clip member 9 helps to retain the bush in the clip member during such assembly. This can be achieved easily where the clip member is formed in a two part mould which has a split line on the inner surface of the clip in contact with the bush 17. In such a case a small amount of moulding flash will appear at the split line and help retain the bush 17. Alternatively, the inner surface of the clip member 10 may have a projection such as a small rib or pip which engages a groove recess in the bush 17.

It will be appreciated that the clip member 10 covers the cylindrical surface of the bush 17 where the arms 16 slide over it during release so that dirt or other debris will not impede release.

At least one hinge section 11A, 11B shown in Figures 2 and 3, may be replaced by a more substantial section which is not required to flex. However, care must be taken not to unduly reduce the flexibility of the C-shaped portion.

In the alternative stay assembly shown in Figure 5 the clip member 10 is fitted to a single stay leg 14A to form a singe stay assembly, there being only one fixing block 15A. In all other respects the stay assembly is similar to the stay assembly described above with reference to Figures 2 and 3 and functions in the same way.

In a modification, not shown, the flange 12 is replaced by a separate washer to retain the clip member 10 on the bush when the bush is secured to a lug 26.

In a further modification, not shown, the bush is overmoulded onto the setscrew 18 so that this is no longer a separate part liable to loss. Alternatively, the setscrew 18 could be replaced by a threaded insert which is overmoulded by the bush which would then have means such as spanner flats on the flange, or a hexagon or other shaped recess for a hexagon wrench (Allen Key) or screwdriver.

Instead of the clip member 10 being of a resilient plastics material, it could be of metal, e.g. cast aluminium or zinc alloy. The bush 17 would then be made of a suitably resilient material, such as an elastomer or a readily deformable plastic which would deform under a tensile release load from the clip member to release the stay assembly in a similar manner to that described above.

Instead of the stays being fixed to clip member by overmoulding, they may be fixed by other means. For example, if conventional wire loop stays with eye ends are used, the eye ends may be clipped laterally into similarly shaped grooves which each face into the wheel.

Instead of the bush being round cylindrical as shown, it may be barrel-shaped or hexagonal and the corresponding inner surface of the clip member shaped accordingly. Similarly, the bush may be elliptical in section and the clip member shaped accordingly.

In a modification to Figure 4 (not shown), the projections 24 each have a head which extends beyond the mudguard outer surface. The holes 25 are made keyhole shaped, i.e. have a part-circular portion large enough to allow the head to pass through and a slot portion narrow enough to be engaged under the head. This will allow the mudguard and stay assembly to be clipped together before the fastener is inserted through the holes 22, 23. Alternatively, the head can be profiled, e.g. have a substantial chamfer or a conical shape so that it can snap through a circular hole.

## Claims

1. A cycle mudguard stay fixing device comprising a clip member having a generally C-shaped portion arranged in use to embrace a support member on a cycle frame in the region of a wheel spindle and having securing means for securing the clip member to a mudguard stay comprising one or more legs arranged generally radially of the wheel spindle, at least one of the C-shaped portion and the support member being resiliently deformable such that in use the clip member releases from the support member above a predetermined tensile force from the stay.

2. A fixing device according to Claim 1 wherein the clip member is a plastics moulding having a part-cylindrical inner surface for embracing the support member.

3. A fixing device according to Claim 1 or Claim 2 wherein said securing means comprises a respective fixing block for the or each leg.

4. A fixing device according to Claim 3 wherein at least one of the or each fixing block is joined to the C-shaped portion by a flexible hinge section.

5. A cycle mudguard stay assembly comprising a fixing device according to any preceding claim secured by said securing means to a mudguard stay comprising one or more legs which in use are arranged generally radially of the wheel spindle, wherein the or each fixing block is moulded from a plastics material onto the radially inner end of the respective stay leg which has a formation thereon which interlocks with the respective fixing block.

6. A stay assembly according to Claim 5, and further comprising a support member arranged in use to be fastened to the cycle fork, or frame, in the region of the wheel spindle, the C-shaped portion of the clip member engaging the outer periphery of the support member.

7. A stay assembly according to Claim 6, wherein the support member comprises a cylindrical boss which in use is secured to a lug on the frame or fork.

8. A stay assembly according to Claim 6 or Claim 7, and further comprising location means to axially locate the clip member on the support member.

9. A cycle mudguard stay assembly comprising two assemblies according to any of Claims 5 to 8, and a bridge member which in use extends over the wheel and provides a direct mounting for a mudguard, the bridge member being a plastics member moulded directly onto the stay legs at their radially outer ends.

10. A cycle mudguard stay assembly comprising at least two legs which are in use arranged one on each side of a wheel and extend generally radially of a wheel spindle and a bridge member which in use extends over the wheel and provides a direct mounting for a mudguard, wherein the bridge member is a plastics moulding which is secured to the stay legs by being overmoulded onto the radially outer ends of the stay legs.
